# EUROPEAN PATENT SPECIFICATION

(11) **EP 4 579 216 B1**
(45) Date of publication and mention of the grant of the patent: **28.10.2026**
(21) Application number: 24178430.5
(22) Date of filing: 28.05.2024
(51) Int. Cl.: G01N 21/03, G01N 21/77, B01L 3/00, G01N 27/00

(54) **BIOSENSOR COMPRISING A SENSOR WAFER WITH BACKSIDE ETCHED RECESSES COMPLEMENTARY TO FRONT SIDE ETCHED RECESSES OF A MICROFLUIDIC WAFER**
BIOSENSOR, BESTEHEND AUS EINEM SENSORWAFER MIT AUF DER RÜCKSEITE GEÄTZTEN AUSSPARUNGEN, DIE KOMPLEMENTÄR ZU AUF DER VORDERSEITE GEÄTZTEN AUSSPARUNGEN EINES MIKROFLUIDISCHEN WAFERS SIND
BIOCAPTEUR COMPRENANT UN WAFER CAPTEUR AVEC DES ÉVIDAGES GRAVÉS À L'ARRIÈRE QUI SONT COMPLÉMENTAIRES À DES ÉVIDAGES GRAVÉS SUR LE CÔTÉ AVANT D'UN WAFER MICROFLUIDIQUE

(30) Priority: 28.12.2023 EP 23220567
(43) Date of publication of application: 02.07.2025
(73) Proprietor: IHP GmbH - Leibniz Institute for High Performance Microelectronics/ Leibniz-Institut für innovative Mikroelektronik, 15236 Frankfurt (Oder) (DE)
(72) Inventor: STEGLICH, Patrick, 15236 Frankfurt (Oder) (DE); PAUL, Martin, 15236 Frankfurt (Oder) (DE)
(74) Representative: Eisenführ Speiser

(56) References cited:
- WO-A2-01/89788
- WO-A2-2005/107938
- US-A1- 2018 221 878
- STEGLICH PATRICK ET AL: "BioPIC -Integration of Biosensors based on Photonic Integrated Circuits by Local-Backside Etching", ATTRACT FINAL CONFERENCE, 24 September 2020 (2020-09-24), pages 1 - 6, XP093223213, Retrieved from the Internet <URL:https://www.researchgate.net/publication/344362107_BioPIC_-_Integration_of_Biosensors_based_on_Photonic_Integrated_Circuits_by_Local-Backside_Etching> [retrieved on 20241112]

## Description

The present invention is concerned with a biosensor wafer arrangement, which comprises combination of a sensor wafer and a microfluidic wafer. It is also concerned with a biosensor wafer kit for fabricating a biosensor wafer arrangement, and with a biosensor chip. The invention is further concerned with a method for fabricating a biosensor wafer arrangement and with a method for fabricating a biosensor chip.

Chip-integrated biosensors are considered to have potential for a multitude of biochemical and biological sensing applications such as food analysis, virus detection, healthcare and environmental monitoring.

Chip-integrated biosensors typically have a functionalized biosensor surface associated with a physical sensor device such as interferometers or resonators, which may be realized in a silicon-based photonic integrated circuit (PIC), or electronic sensors. Chip-integrated sensors are generally resistant to electromagnetic interference, exhibit a high sensitivity and a low detection limit, while providing a small footprint, and allow labeled as well as label-free sensing, and also multiplexing of several analytes at the same time. Furthermore, an integration into lab-on-a-chip systems is feasible.

Surface functionalization of the biosensor surface equips a substrate having standard bulk material properties, for instance a silicon substrate formed by a wafer, with specific chemical functional groups on one of its substrate surfaces. Surface functionalization typically involves a material deposition on the substrate.

Different methods of surface functionalization can be used, depending inter alia on the type of substrate material and the desired functional groups. It is for instance known to perform wafer-level surface functionalization by an inkjet process. An advantage of this process is a good control of the localization of the desired surface treatment, which avoids an unwanted additional covering of surface areas that are not to be functionalized, for instance for comprising electrodes. A disadvantage of this process is that afterwards indiscriminate surface cleaning is not possible with this process. Surface cleaning removes impurities, reagent residues, and possible structural defects that may affect the bonding efficiency, surface properties, and thus device performance. Surface cleaning can also prepare the substrate for subsequent etching and texturing steps. In addition, in terms of process efficiency, an inkjet process only allows a partial parallelization. Therefore, the inkjet process is comparably slow where functionalization is to be performed to fabricate several thousand sensors on one wafer.

An alternative process, which allows a single surface functionalization step to cover the entire desired area of a wafer, is a Molecular Layer Deposition (MLD) technique. A plasma or ozone gas is used in this MLD process can also be used to clean the wafer surface. A disadvantage, however, is that those areas on the wafer, which are not to be functionalized, e.g. electrodes, have to be protected before the process is applied. For this purpose, the wafer is usually coated with a photoresist, which is then structured so that only the desired sensor areas are left open for the surface functionalization. Also many sensitive or large precursor molecules are not stable under MLD conditions and, due to decomposition, cannot be used with this coating approach.

US2018/221878 A1 discloses an apparatus comprising a specimen treatment chip in the form of a microfluidic chip and a fluorescence detector. The microfluidic chip is formed of a substrate with a plurality of channels that combine with channels from fluid modules to establish a fluid connection. The fluid modules are provided separately on the substrate of the microfluidic chip.

It is an object of the present invention to provide an alternative wafer arrangement and an alternative process for surface functionalization of a wafer surface.

According to a first aspect of the present invention, a biosensor wafer arrangement is provided, which comprises a sensor wafer and a microfluidic wafer; wherein
- the sensor wafer has a first lateral extension, a front side and a back side, the front side comprising monolithically integrated electronic, optoelectronic or photonic components, and the back side comprising integrated biosensor recesses that
   - extend in a depth direction from a back surface on the back side of the sensor wafer towards the front side,
   - considering the sensor wafer alone, are fluidically isolated from each other;
   - have a biosensor surface connected with one or more of the components on the front side for sensor signal communication through the sensor wafer;
   - are formed and arranged on the back side of the sensor wafer in a first pattern; and wherein
- the microfluidic wafer has a second lateral extension, a front side and a back side, the front side comprising integrated microfluidic channel-section recesses that
   - extend in a depth direction from a front surface on the front side of the microfluidic wafer towards the back side,
   - considering the microfluidic wafer alone, are fluidically isolated from each other; and
   - are formed and arranged on the front side of the microfluidic wafer in a second pattern that is complementary to the first pattern;
wherein sensor wafer and the microfluidic wafer are combined back-surface-to-front-surface in a fluid-tight manner and positioned relative to each other such that given micro-fluidic-channel sections on the microfluidic wafer overlap with respective pairs of biosensor recesses on the sensor wafer and have a lateral extension that establishes a microfluidic interconnection between the respective pairs of biosensor recesses via the microfluidic-channel sections.

Accordingly, a microfluidic wafer with microstructures in the form of channel-section recesses on its front side is applied to a back side of the sensor wafer. The sensor wafer is preferably a wafer used in the semiconductor industry for the fabrication of integrated electronic circuit. In particular, the sensor wafer may be a silicon wafer or a silicon-on-insulator (SOI) wafer. Notably, the biosensor recesses are provided on the back side of the sensor wafer, exposing surface sections of the semiconductor material of the sensor wafer in the biosensor recesses, in particular silicon, as a biosensor surface. It is only upon establishment of the biosensor wafer arrangement with the microfluidic wafer that the biosensor surfaces in the recesses on the sensor wafer become fluidically connected with each other and accessible via microfluidic channels for a microfluidic supply of a fluid that provides the functionalization of the biosensor surface in the fabrication process. The biosensor wafer arrangement also allows performing a chemical cleaning step of the biosensor surface before the functionalization, e.g. by etching with HF or KOH or with a plasma, e.g. Ozone, using the same microfluidic access.

As a result of the processing enabled by the biosensor wafer arrangement of the present invention, the biosensor surface may comprise a chemical compound that adheres to the biosensor surface and has a functional group suitable for capturing one or more types of biochemical or biological particles. The chemical compound may for instance be one or more of an amine, an epoxide, a thiol, a carboxy-group, and polyethylene glycol.

However, the wafer arrangement may also be provided for sale without such chemical functionalization of the biosensor surfaces, in order to allow industrial or research customers applying their own desired functionalization of the biosensor surfaces according to the needs of their particular application case, using the microfluidic structure established by the biosensor wafer arrangement. In both cases, i.e., with or without chemical functionalization, the biosensor surface may be provided coated with an adhesion agent for promoting the chemical functionalization with a chemical compound that is to be provided to the biosensor surface and adhere to the biosensor surface for capturing one or more types of biochemical or biological particles in operation of a biosensor to be fabricated from the biosensor wafer arrangement. For instance, the biosensor surface may be silanized. Silanization thus provides an adherence agent to the silicon surface with functional groups such as amines, epoxides, thiols, polyethylene glycol, etc..

This biosensor wafer arrangement thus established may form an either tight or detachable combination. In a first alternative of the biosensor wafer arrangement, the sensor wafer and the microfluidic wafer are combined by a mechanically detachable connection, for allowing maintaining their combination only temporarily. This allows reusing the microfluidic wafer in the processing of a plurality of sensor wafers. In this alternative, the surface of the microfluidic wafer may be covered with an inert thin sealing film or adhesive film, e.g. PDMS (polydimethylsiloxane), polyurethane, or the like. In this case, the microfluidic substrate may be compared with a stamp. The microfluidic substrate may in particular be a plate made of plastic or metal is provided with the channel-section recesses and any required further microstructures, and covered with an inert thin sealing film or adhesive film, as mentioned, and then applied to the back of the sensor wafer.

In a second alternative of the biosensor wafer arrangement, the sensor wafer and the microfluidic wafer are combined by a mechanically tight connection, for permanently maintaining their combination.

In the biosensor wafer arrangement the integrated biosensor recesses and the microfluidic channel sections may be partitioned into a plurality of groups that are distributed across the wafer. For each group, the microfluidic wafer may comprise, extending vertically from the front side to the back side of the microfluidic wafer, a fluid input opening and a fluid output opening. This allows implementing an input and output of fluid for surface functionalization from the backside of the sensor wafer, which helps avoiding contamination or required protective coating of the any electronic components the front side of the sensor wafer. Thus, fluidic inlets and outlets are provided which bring any desired fluidic substances in direct contact with the biosensor surface, via fluidic channels established only with the wafer arrangement. The design and arrangement of the fluidic microstructures for the groups, i.e., the biosensor recesses and the fluidic-channel sections associated with the groups, is not necessarily, but preferably symmetrical to enable a uniformly distributed supply of fluid for coating the biosensor surface.

Further in such biosensor wafer arrangements, for distributing and collecting fluid to and from the groups of biosensor recesses, the groups of biosensor recesses and the groups of microfluidic-channel sections each are preferably partitioned into a plurality of subgroups. The microfluidic wafer may further comprise, associated with each group of microfluidic-channel sections:
a) connected to the input opening and arranged on the front side, a fluid distributor channel section that is shaped and arranged and to establish a fluid input connection from the fluid input opening to the subgroups in parallel, and,
b) connected to the output opening and arranged on the front side, a fluid collector channel section that that is shaped and arranged and to establish a fluid output connection from the subgroups to the fluid output opening.

The microfluidic wafer may comprise on its front surface a sealing film which is chemically inert, for sealing an interface between the back surface of the sensor wafer and the front surface of the microfluidic wafer and limiting flow of fluid to the respective recesses. Among suitable materials for the sealing film are Polydimethylsiloxane (PDMS) and Polyurethane.

The biosensor wafer arrangement of any of the preceding claims, wherein the microfluidic wafer is smaller than the sensor wafer and covers only a subset of the groups of biosensor recesses on the sensor wafer.

The microfluidic wafer of the biosensor wafer arrangement may be some embodiments made of a transparent material, for allowing an optical inspection of fluid transport.

The particular structure of the sensor wafer in biosensor wafer arrangement of the present invention provides components (i.e., electronic, optical, optoelectronic or photonic devices) on the front side of the sensor wafer. This allows providing the biosensor surfaces on the back side of the wafer connected to sensing devices on the sensor wafer that are configured, in operation of a biosensor to be fabricated from the wafer arrangement, to detect changes in a physical quantity of the biosensor surface in response to its capturing of the one or more types of biochemical or biological particles, and to provide an electrical signal indicative thereof to the one or more of the components integrated on the front side of the sensor wafer. The physical quantity can be any optical or electrical quantity that is indicative of the presence of a captured particle under test on the functionalized biosensor surface. The front side of the wafer can also be used for electrical or optical contacts and for process control.

A second aspect of the present invention is a biosensor chip that is cut from a biosensor wafer arrangement with a suitable functionalization of the biosensor surface in place.

A third aspect of the present invention is biosensor wafer kit for fabricating a biosensor wafer arrangement according to any of the described embodiments of the first aspect of the invention, or a biosensor of the second invention. The wafer kit is an intermediate product in the fabrication of biosensor chips and provides a commercial customer specializing in the chemical functionalization of the biosensor surface a corresponding set of wafers for further processing. The wafer kit of the third aspect comprises
- one or more of the sensor wafers;
- one or more of the microfluidic wafers; wherein
- each of the sensor wafers has a first lateral extension, a front side and a back side, the front side comprising monolithically integrated electronic circuit components, and the back side comprising integrated biosensor recesses that
   - extend in a depth direction from a back surface on the back side of the sensor wafer towards the front side,
   - considering the sensor wafer alone, are fluidically isolated from each other;
   - have a biosensor surface;
   - are arranged at in a first pattern; and wherein
- each of the microfluidic wafers has a second lateral extension, a front side and a back side, the front side comprising integrated microfluidic channel-section recesses that
   - extend in a depth direction from a front surface on the front side of the microfluidic wafer towards the back side,
   - considering the microfluidic wafer alone, are fluidically isolated from each other;
      and
   - are formed and arranged in a second pattern that is complementary to the first pattern when the sensor wafer and the microfluidic wafer are combined back-surface-to-front-surface and positioned relative to each other such that given microfluidic-channel sections on the microfluidic wafer overlap with respective pairs of biosensor recesses on the sensor wafer and have a lateral extension that establishes a microfluidic interconnection between the respective pairs of biosensor recesses via the microfluidic-channel sections.

In particular, the wafer kit may comprise a plurality of the sensor wafers and a number of the microfluidic wafers that is smaller than the number of sensor wafers, for multiple re-use of any given microfluidic wafer in the fabrication of biosensor wafer arrangements using a detachable combination between the sensor wafer and the microfluidic wafer.

A fourth aspect of the present invention is formed by a method for fabricating a biosensor wafer arrangement according to the first aspect of the invention. The method comprises:
- providing a wafer kit according to the third aspect of the invention;
- selecting one sensor wafer and one microfluidic wafer; and
- positioning relative to each other and combining the sensor wafer and the microfluidic wafer back-surface-to-front-surface such that given microfluidic-channel sections on the microfluidic wafer overlap with respective pairs of biosensor recesses on the sensor wafer and have a lateral extension that establishes a microfluidic interconnection between the respective pairs of biosensor recesses via the microfluidic-channel sections.

The positioning is done, whether temporarily or permanently, by a device for pressing the microfluidic wafer and sensor wafer together after a fine adjustment of their relative orientation and position with respect to each other. For this adjustment, one or more marks on the wafer edge of the sensor wafer and the microfluidic wafer may be used. For instance, silicon or SOI wafers used in the industry have a notch providing orientation assistance in the positioning process.

For fabricating a biosensor wafer arrangement with a chemical functionalization of the biosensor surfaces, the method suitably further comprises providing and conducting to the biosensor surface of the biosensor recesses, through the input opening on the microfluidic wafer and via the microfluidic interconnections between the respective pairs of biosensor recesses established by the microfluidic-channel sections, a functional fluid comprising the chemical compound for chemical functionalization, for adhering to the biosensor surfaces. For this step, a fluid pump may be used to apply the fluid from a fluid reservoir, using either overpressure on the input side of the microfluidic wafer or under pressure on the output side of the microfluidic wafer.

As also described previously, the method may further comprise, prior to providing the functional fluid, providing and conducting to the biosensor surface of the biosensor recesses, through the input opening on the microfluidic wafer and via the microfluidic interconnections between the respective pairs of biosensor recesses established by the microfluidic-channel sections, a cleaning fluid comprising a cleaning agent for cleaning the biosensor surfaces.

Finally, a fifth aspect of the present invention is a method for fabricating a biosensor chip. The method comprises
- performing a method according to the fourth aspect of the invention for fabricating a biosensor wafer arrangement; and
- cutting the biosensor wafer arrangement into a desired set of fractions to obtain the biosensor chip.

In the following, further embodiments will be described with reference to the enclosed drawings.
Fig. 1 shows a plan view of an exemplary layout of a group, here referred to as test field, of fluidically mutually isolated integrated biosensor recesses, here referred to as LBE (local backside etching) windows, to be provided on a back side of an exemplary sensor wafer;
Fig. 2 shows a plan view of a back side of an exemplary sensor wafer partitioned into groups of fluidically mutually isolated integrated biosensor recesses as in Fig. 1, pertaining to an embodiment of the invention;
Fig. 3 shows a schematic cross-sectional view of the wafer of Fig. 2 along a central horizontal line III-III in Fig. 2;
Figs. 4A to 4C show a plan view and two schematic cross-sectional views of a group of fluidically mutually isolated channel-section recesses, also referred to as channels or connector structures, and a fluid distributor channel section (Reagent distributor channel) with an input hole and a fluid collector channel section (Eluent collector channel) with an output hole, to be provided on a front side of an exemplary microfluidic wafer;
Fig. 5 shows a plan view of a front side of an exemplary microfluidic wafer partitioned into groups of fluidically mutually isolated channel-section recesses as in Figs. 4A to 4C, pertaining to an embodiment of the invention;
Figs 6 shows a cross-sectional view of the wafer of Fig. 5 along a central horizontal dashed line VI-VI in Fig. 5
Figs. 7A to 7C show a plan overlay view and two schematic cross-sectional views of a combination of groups of fluidically mutually isolated integrated biosensor in a sensor wafer ("Wafer") and recesses and mutually isolated channel-section recesses in a microfluidic wafer ("stamp carrier") in a biosensor wafer arrangement, illustrating their complementary arrangement that establishes a microfluidic interconnection between the respective pairs of biosensor recesses via the microfluidic-channel sections in a biosensor wafer arrangement according to an embodiment of the invention;

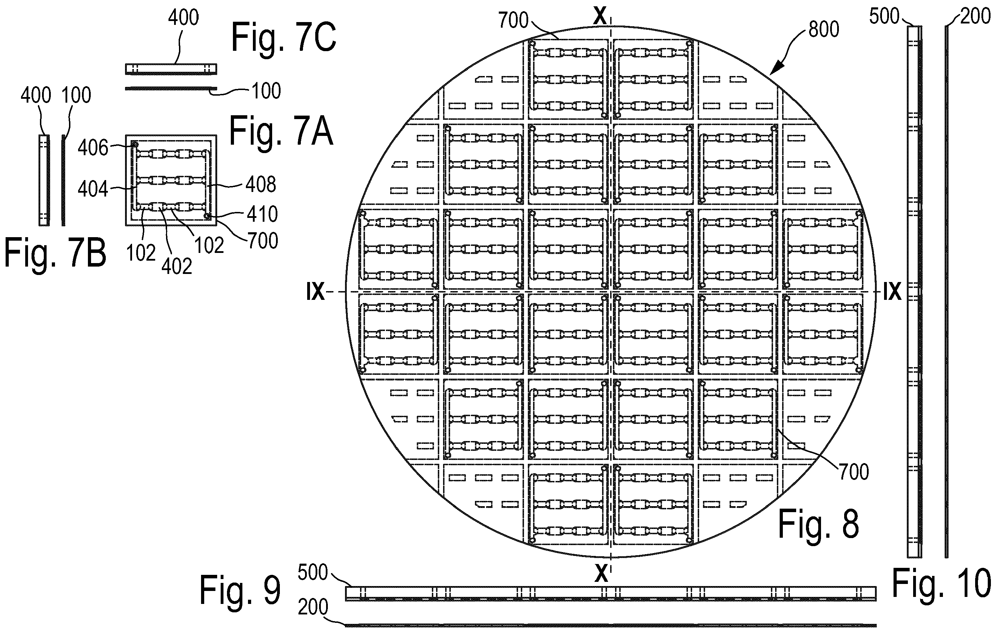

Fig. 8 shows a plan overlay view of a front side of an exemplary biosensor wafer arrangement according to an embodiment of the present invention, with a combination of microfluidic wafer partitioned into groups of fluidically mutually isolated channel-section recesses on the front side of the microfluidic wafer and complementary groups of fluidically mutually isolated biosensor recesses on a backside of a sensor wafer, illustrating their complementary arrangement on the wafer level that establishes a microfluidic interconnection between the respective pairs of biosensor recesses via the microfluidic-channel sections within a respective group in a biosensor wafer arrangement according to an embodiment of the invention; and
Figs. 9 and 10 show schematic cross-sectional views of the biosensor wafer arrangement of Fig. 8 along central horizontal and vertical dashed lines IX-IX and X-X in Fig. 8.

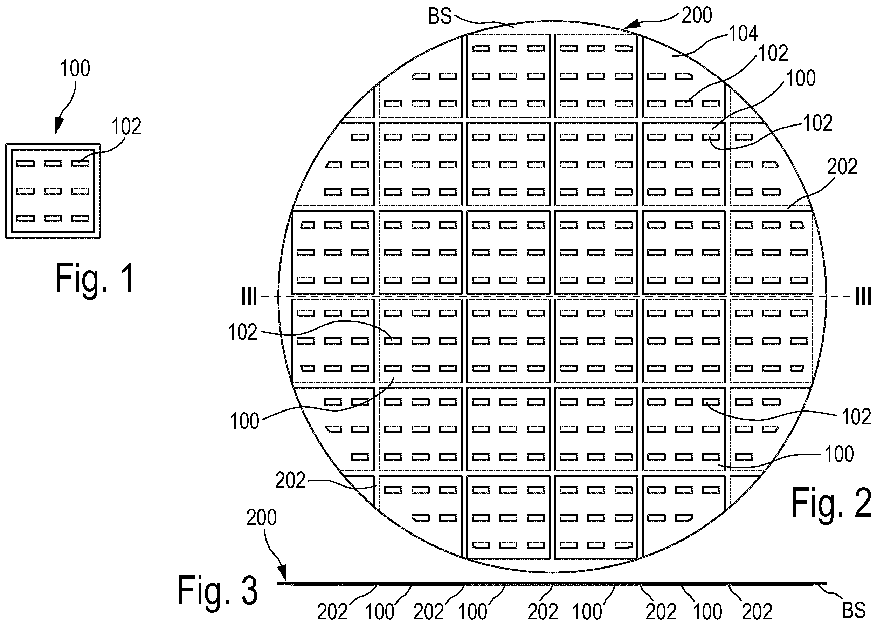

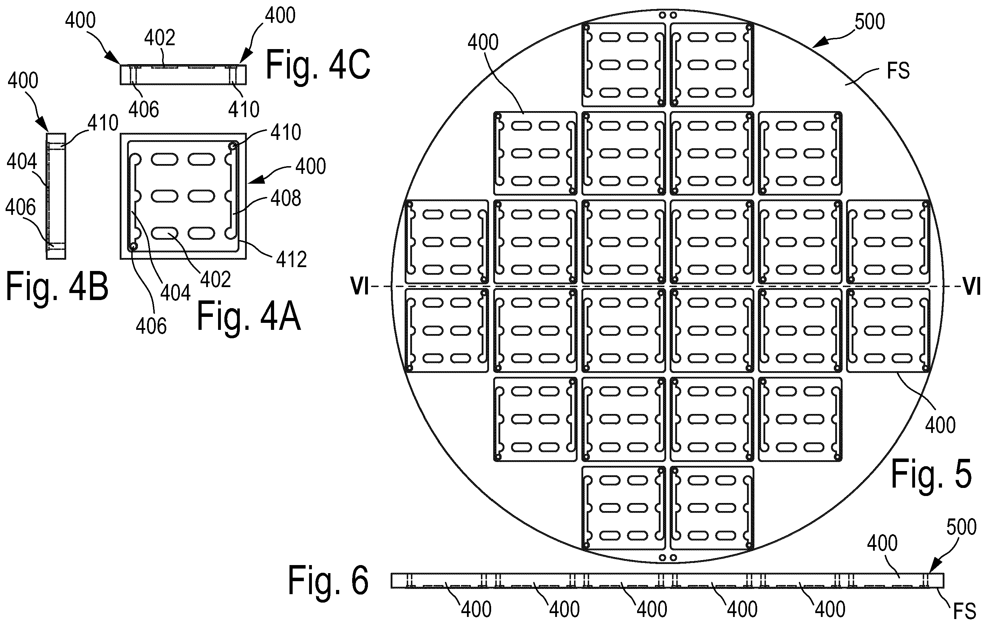

The following description refers to Figs. 1 to 3 in parallel to describe an exemplary a sensor wafer 200 for use in a biosensor wafer arrangement, which comprises the sensor wafer and a microfluidic wafer (cf. Figs. 4 to 6).

Fig. 1 is a plan view of an exemplary layout of a group, here referred to as test field 100, of fluidically mutually isolated integrated biosensor recesses 102, that may also be referred to as LBE (local backside etching) windows, to be provided on a back side BS of an exemplary sensor wafer 200.

Fig. 2 is a plan view of the back BS side of the exemplary sensor wafer 200. The sensor wafer is partitioned on its backside BS by a rectangular grid of longitudinal trenches 202 into an array of test fields 100 that each have a set of fluidically mutually isolated integrated biosensor recesses 102 as shown in Fig. 1. The biosensor recesses 102 extend in a depth direction from the back surface on the back side BS of the sensor wafer towards the front side of the sensor wafer. Considering the sensor wafer alone, the biosensor recesses 102 are fluidically isolated from each other.

On a front side of the sensor wafer (not shown) monolithically integrated electronic, optoelectronic or photonic components are arranged. Such components may be used to drive and control operation of the sensor wafer in sensing and signal processing. The biosensor recesses 102 have a biosensor surface that is connected with one or more of the components on the front side for sensor signal communication through the sensor wafer. To this end, through substrate vias may be used (not shown). Fig. 3 is a schematic cross-sectional view of the wafer 200 of Fig. 2 along a central horizontal line III-III shown in Fig. 2. The illustration of Fig. 3 is aligned with that of Fig. 2 in terms of the lateral extension of the sensor wafer 200.

The test fields 100 cover the entire sensor wafer. Some of the test fields that are arranged on the edge of the sensor wafer 200, such as the test field 104, have a different pattern of arrangement of their LBE windows 102. For this reason, they may be excluded from use in the formation of a biosensor. However, depending on the application they may be used for special purposes differing from those of the test field 100.

The biosensor recesses 102 are provided on the back side BS of the sensor wafer 200 to expose surface sections of the semiconductor material of the sensor wafer in the biosensor recesses, in particular silicon, as a biosensor surface. However, it is only upon establishment of the biosensor wafer arrangement (cf. Fig. 7) with the microfluidic wafer (cf. Figs 4 to 6) that the surfaces in the biosensor recesses 102 on the sensor wafer 200 become fluidically connected with each other and thus accessible via microfluidic channels for a microfluidic supply of a fluid that provides a functionalization of the biosensor surface in the fabrication process. The biosensor wafer arrangement also allows performing a chemical cleaning step of the biosensor surface before the functionalization, e.g. by etching with HF or KOH or with a plasma, e.g. Ozone, using the same microfluidic access.

The following description refers to Figs. 4 to 6 in parallel to describe an exemplary a microfluidic wafer 500 for use in a biosensor wafer arrangement, which comprises the sensor wafer 200 of Figs. 1 to 3 and the microfluidic wafer.

Figs. 4A to 4C show a plan view and two schematic cross-sectional views of a group 400 of fluidically mutually isolated channel-section recesses 402 (also referred to as channels or connector structures), and a fluid distributor channel section 404 (also referred to as reagent distributor channel) with an input hole 406, and a fluid collector channel section 408 with an output hole 410, to be provided in an elevated area 412 on a front side FS of an exemplary microfluidic wafer 500. The wafer 500 may also be referred to as a stamp wafer. A plan view of the front side FS of the exemplary microfluidic wafer 500 is shown in Fig. 5. The front side FS is partitioned into a plurality groups 400 of fluidically mutually isolated channel-section recesses as shown in Figs. 4A to 4C. The microfluidic wafer 500 has a structure that is complementary to the sensor wafer 200 in its arrangement of channel-section recesses. As for the sensor recesses 102 in the sensor wafer 200, considering the microfluidic wafer 500 alone, the channel-section recesses 402 are fluidically isolated from each other. They are formed and arranged on the front side FS of the microfluidic wafer 500 of the microfluidic wafer in a second pattern that is complementary to the first pattern of the sensor recesses 102 of the sensor wafer 200, in order to allow a fluid flow between the sensor recesses in an common arrangement of the sensor wafer 200 and of the microfluidic wafer 500 (cf. Figs. 7 to 10). Figs 6 shows a cross-sectional view of the wafer 500 of Fig. 5 along a central horizontal dashed line VI-VI indicated in Fig. 5. The illustration of Fig. 6 is aligned with that of Fig. 5 in terms of the lateral extension of the microfluidic wafer 500.

The following description turns to a microfluidic sensor arrangement 800 formed from the sensor wafer 200 and the microfluidic wafer 500 and refers to Figs. 7 to 10 in parallel.

Figs. 7A to 7C show a plan overlay view and two schematic cross-sectional views of a combined arrangement 700 of groups of fluidically mutually isolated integrated biosensor recesses 102 in a sensor wafer 200 and of mutually isolated channel-section recesses 402 in a micro-fluidic wafer 500 ("stamp carrier") in a biosensor wafer arrangement 800 illustrated in Fig. 8. Fig. 8 is a plan overlay view of the biosensor wafer arrangement 800 according, with a combination of the microfluidic wafer 500 partitioned into groups 400 of fluidically mutually isolated channel-section recesses 402 on the front side of the microfluidic wafer 500 and complementary groups 100 of fluidically mutually isolated biosensor recesses 102 on a backside of a sensor wafer 200. As can be seen, their complementary arrangement on the wafer level establishes a microfluidic interconnection between the respective pairs of biosensor recesses via the microfluidic-channel sections within a respective group in a biosensor wafer arrangement. Figs. 9 and 10 show schematic cross-sectional views of the biosensor wafer arrangement 800 of Fig. 8 along central horizontal and vertical dashed lines IX-IX and X-X in Fig. 8.

The overlay view of Fig. 8 illustrates the effect of an arrangement of the sensor wafer 200 and the microfluidic wafer 500 in a fluid-tight back-surface-to-front-surface combination. The two wafers are precisely positioned relative to each other such that given microfluidic-channel sections 402 on the microfluidic wafer 500 overlap with respective pairs of biosensor recesses 102 on the sensor wafer 200 and have a lateral extension that establishes a microfluidic interconnection between the respective pairs of biosensor recesses 102 via the microfluidic-channel sections 402. Accordingly, the microfluidic wafer 500 with microstructures in the form of channel-section recesses 402 on its front side FS is applied to a back side BS of the sensor wafer 200 to form the biosensor wafer arrangement 800. The complementary arrangement of the pre-fabricated structures on the wafers establishes a microfluidic interconnection between the respective pairs of biosensor recesses 102 via the microfluidic-channel sections 402. This enables a subsequent processing of the biosensor wafer arrangement, in which the biosensor surface may be provided with a chemical compound that adheres to the biosensor surface of the biosensor recesses 102 and has a functional group suitable for capturing one or more types of biochemical or biological particles. The chemical compound may for instance be one or more of an amine, an epoxide, a thiol, a carboxy-group, and polyethylene glycol. Depending on the desired application, the microfluidic wafer 500 can be removed after this fabrication step. In other applications, the microfluidic wafer 500 remains applied to the sensor wafer 200 permanently.

The biosensor wafer 200 or the arrangement of the biosensor wafer and the microfluidic wafer can subsequently be divided into individual biosensor chips comprising one or more of the groups or test fields 100.

In an alternative biosensor wafer arrangement, instead of using a single microfluidic wafer 500 as illustrated in Figs. 8 to 10, several smaller microfluidic wafers 500 forming small sub-stamps and covering different sections of the sensor wafer 200 can be used in the fabrication process of a biosensor wafer. The biosensor wafer can then be subsequently divided into individual biosensor chips.

In the fabrication process, the microfluidic wafer 500 must be pressed onto the sensor wafer 200 with high precision and sufficient pressure to ensure a fluidic seal. Upon proper positioning, taking the example of a 200 mm sensor wafer, the arrangement of the microfluidic wafer 500 and the sensor wafer 200 achieves a connection between the biosensor recesses 102 on the sensor wafer 200 via several thousand precision microfluidic channel sections 402 in complementary arrangement with the biosensor recesses 102.

Figs 8 to 10 thus also illustrate a biosensor wafer kit that may be provided by a wafer manufacturer to a biosensor manufacturer as an intermediate product for completing the fabrication of a biosensor wafer or a biosensor wafer arrangement as described. The biosensor wafer kit comprises one or more of the sensor wafers 200 and one or more of the microfluidic wafers 500.

Next, fabrication options of the microfluidic wafer 500 are described.

The microfluidic wafer (stamp) 500 can be fabricated according to different production methods, as described in the following:
First Option:
   A polished, stable substrate made of polymer, glass, ceramic or metal is provided with fine, symmetrical channels of shallow depth (>10 µm, <1000 µm) by precision machining, e.g. laser ablation, micro-CNC milling or electrochemical machining (ECM). The substrate can also be drilled to allow reagents to be pumped or sucked in and out of the stamp via the rear side. The surface of the stamp 500 that comes into contact with the sensor wafer 200 is coated with an elastic substance, e.g. silicone (Dow Sylguard 184), thermoplastic polyurethane (TPU) or fluororubber (FKM) thinly coated (1-500 µm), e.g. with spin coating or sprayed on.
Second Option:
   A polished, stable substrate made of polymer, glass, ceramic or metal is coated with a thin layer of elastic, light-sensitive photoresist, e.g. by spin coating. The resist is then selectively exposed with a laser (i.e. "maskless") or with a photo mask, so that the exposed material can then either be removed with solvent (positive) or the unexposed material is removed (negative) and a structure with fine, symmetrical channels is obtained. Holes for fluid input and output can then be drilled to contact the structures. Alternatively, an impression of the exposed microstructures can be made from elastic polymer and bonded to a stable support to obtain the stamp.
Third Option:
   Additive manufacturing processes such as stereolithography (SLA) or two-photon polymerization (TPP) can be used to grow thin (1-500 µm) microstructures made of elastic material on stable substrates made of polymer, glass, ceramic or metal. Holes can then be drilled to contact the structures.

The following is a description of the use of the microfluidic wafer 500 in the fabrication process of a biosensor wafer 200 with biosensor recesses:
An LBE process creates ordered cavities in the test fields 100 of the sensor wafer 200, which are delimited by a thin membrane consisting of the front end of line (FEOL) and the back end of line (BEOL) as well as by the surrounding bulk silicon of the wafer. The stamp wafer 500 also has cavities, in particular microfluidic channels 402, which are arranged complementarily to the biosensor recesses 102 on the sensor wafer 200 when the stamp wafer 500 is correctly positioned relative to the sensor wafer 200. This leads to the (temporary or permanent, as desired) formation of microfluidic channels when the stamp (microfluidic wafer) is precisely positioned on the back of the wafer. In addition to the LBE connection cavities, the stamp must also contain input and output transport channels for reagents. These channels may not be arranged exclusively symmetrically in order to generate the same counterpressures through the same path lengths of the channels to enable a homogeneous coating, in particular with layer containing a chemical compound that adheres to the biosensor surface and has a functional group suitable for capturing one or more types of biochemical or biological particles. For the sealing of stamp and wafer, the stamp must have a planar surface with low roughness, which consists of a flexible material that is inert for the reagents used, such as PDMS or fluoropolymers.

In summary, a biosensor wafer arrangement comprises a sensor wafer and a microfluidic wafer. The sensor wafer comprises integrated components. On its opposite back side, it has integrated biosensor recesses. The biosensor recesses are fluidically isolated from each other and have a biosensor surface connected with one or more components on the front side for sensor signal communication through the sensor wafer. The biosensor recesses are provided in a first pattern. The microfluidic wafer, on its front side, comprises microfluidic channel-section recesses that are fluidically isolated from each other, and are provided in a second pattern which is complementary to the first pattern. The sensor wafer and the microfluidic wafer may be combined back-to-front and in a fluid-tight manner, and positioned relative to each other such that microfluidic-channel sections on the microfluidic wafer overlap with pairs of biosensor recesses on the sensor wafer to establish a microfluidic interconnection between the pairs of biosensor recesses via the microfluidic-channel sections.

## Claims

1. A biosensor wafer arrangement (800), which comprises a sensor wafer (200) and a microfluidic wafer (500), wherein
- the sensor wafer has a first lateral extension, a front side and a back side, the front side comprising monolithically integrated electronic, optoelectronic or photonic components, and the back side comprising integrated biosensor recesses (102) that
- extend in a depth direction from a back surface on the back side of the sensor wafer towards the front side,
- considering the sensor wafer alone, are fluidically isolated from each other;
- have a biosensor surface connected with one or more of the components on the front side for sensor signal communication through the sensor wafer;
- are formed and arranged on the back side of the sensor wafer in a first pattern; and wherein
- the microfluidic wafer has a second lateral extension, a front side and a back side, the front side comprising integrated microfluidic channel-section recesses (402) that
- extend in a depth direction from a front surface on the front side of the microfluidic wafer towards the back side,
- considering the microfluidic wafer alone, are fluidically isolated from each other; and
- are formed and arranged on the front side of the microfluidic wafer in a second pattern that is complementary to the first pattern;
wherein sensor wafer and the microfluidic wafer are combined back-surface-to-front-surface in a fluid-tight manner and positioned relative to each other such that given microfluidic-channel sections on the microfluidic wafer overlap with respective pairs of biosensor recesses on the sensor wafer and have a lateral extension that establishes a microfluidic interconnection between the respective pairs of biosensor recesses via the microfluidic-channel sections.

2. The biosensor wafer arrangement of claim 1, wherein
the integrated biosensor recesses (102) and the microfluidic channel sections (402) are partitioned into a plurality of groups (100, 400) that are distributed across the wafer, and wherein, for each group, the microfluidic wafer (500) comprises, extending vertically from the front side to the back side of the microfluidic wafer, a fluid input opening (406) and a fluid output opening (410).

3. The biosensor wafer arrangement of claim 2, wherein for distributing and collecting fluid to and from the groups of biosensor recesses (102),
- the groups of biosensor recesses and the groups of microfluidic-channel sections (402) each are partitioned into a plurality of subgroups; and
- the microfluidic wafer (500) further comprises, associated with each group of microfluidic-channel sections,
- connected to the input opening (406) and arranged on the front side, a fluid distributor channel section (404) that is shaped and arranged to establish a fluid input connection from the fluid input opening to the subgroups in parallel, and,
- connected to the output opening and arranged on the front side, a fluid collector channel section that is shaped and arranged to establish a fluid output connection from the subgroups to the fluid output opening.

4. The biosensor wafer arrangement of any of the preceding claims, wherein the microfluidic wafer (500) comprises on its front surface a sealing film which is chemically inert, for sealing an interface between the back surface of the sensor wafer (200) and the front surface of the microfluidic wafer and limiting flow of fluid to the respective recesses (102).

5. The biosensor wafer arrangement of any of the preceding claims, wherein
the microfluidic wafer (500) is smaller than the sensor wafer (200) and covers only a subset of the groups of biosensor recesses (102) on the sensor wafer, or wherein
the microfluidic wafer, for allowing an optical inspection of fluid transport, is made of a transparent material.

6. The biosensor wafer arrangement of any of the preceding claims, wherein
(a) the biosensor surface comprises a chemical compound that adheres to the biosensor surface and has a functional group suitable for capturing one or more types of biochemical or biological particles, or wherein
(b) the biosensor surface is coated with an adhesion agent for promoting a chemical functionalization with a chemical compound that is to be provided to the biosensor surface and adhere to the biosensor surface for capturing one or more types of biochemical or biological particles in operation of a biosensor to be fabricated from the biosensor wafer arrangement.

7. The biosensor wafer arrangement of claim 6, wherein the biosensor surface is connected to a sensing device on the sensor wafer (200) that is configured to detect changes in a physical quantity of the biosensor surface in response to its capturing of the one or more types of biochemical or biological particles, and to provide an electrical signal indicative thereof to the one or more of the components integrated on the front side of the sensor wafer.

8. The biosensor wafer arrangement of any of the preceding claims, wherein either
(A) the sensor wafer (200) and the microfluidic wafer (500) are combined by a mechanically detachable connection, for allowing maintaining their combination only temporarily; or wherein
(B) the sensor wafer and the microfluidic wafer are combined by a mechanically tight connection, for permanently maintaining their combination.

9. A biosensor chip, cut from a biosensor wafer arrangement according to a combination of feature set (b) of claim 6, claim 7 and alternative (B) of claim 8.

10. A biosensor wafer kit for fabricating a biosensor wafer arrangement according to any of the claims 1 to 8 or a biosensor chip of claim 9, the wafer kit comprising
- one or more of the sensor wafers (200);
- one or more of the microfluidic wafers (500); wherein
- each of the sensor wafers has a first lateral extension, a front side and a back side, the front side comprising monolithically integrated electronic circuit components, and the back side comprising integrated biosensor recesses (102) that
- extend in a depth direction from a back surface on the back side of the sensor wafer towards the front side,
- considering the sensor wafer alone, are fluidically isolated from each other;
- have a biosensor surface;
- are arranged at in a first pattern; and wherein
- each of the microfluidic wafers has a second lateral extension, a front side and a back side, the front side comprising integrated microfluidic channel-section recesses (402) that
- extend in a depth direction from a front surface on the front side of the microfluidic wafer towards the back side,
- considering the microfluidic wafer alone, are fluidically isolated from each other; and
- are formed and arranged in a second pattern that is complementary to the first pattern when the sensor wafer and the microfluidic wafer are combined back-surface-to-front-surface and positioned relative to each other such that given microfluidic-channel sections on the microfluidic wafer overlap with respective pairs of biosensor recesses on the sensor wafer and have a lateral extension that establishes a microfluidic interconnection between the respective pairs of biosensor recesses via the microfluidic-channel sections.

11. The biosensor wafer kit of claim 10 for fabrication of a plurality of biosensor wafer arrangements according to alternative (A) of claim 8, comprising a plurality of the sensor wafers (200) and a number of the microfluidic wafers (500) that is smaller than the number of sensor wafers, for multiple re-use of any given microfluidic wafer in the fabrication of biosensor wafer arrangements.

12. A method for fabricating a biosensor wafer arrangement according to any of the claims 1 to 8, the method comprising
- providing a wafer kit according to claim 10 or 11;
- selecting one sensor wafer (200) and one microfluidic wafer (500);
- positioning relative to each other and combining the sensor wafer and the microfluidic wafer back-surface-to-front-surface such that given microfluidic-channel sections (402) on the microfluidic wafer overlap with respective pairs of biosensor recesses (102) on the sensor wafer and have a lateral extension that establishes a microfluidic interconnection between the respective pairs of biosensor recesses via the microfluidic-channel sections.

13. The method of claim 12, wherein
- the biosensor wafer kit is for fabricating a biosensor wafer arrangement according to a combination of at least claims 2 and feature set (a) of claim 6; the method further comprising
- providing and conducting to the biosensor surface of the biosensor recesses (102), through the input opening (406) on the microfluidic wafer (500) and via the microfluidic interconnections between the respective pairs of biosensor recesses (102) established by the microfluidic-channel sections (402), a functional fluid comprising the chemical compound for chemical functionalization, for adhering to the biosensor surfaces.

14. The method of claim 12 or 13, further comprising, prior to providing the functional fluid, providing and conducting to the biosensor surface of the biosensor recesses (102), through the input opening (406) on the microfluidic wafer (500) and via the microfluidic interconnections between the respective pairs of biosensor recesses established by the microfluidic-channel sections (402), a cleaning fluid comprising a cleaning agent for cleaning the biosensor surfaces.

15. A method for fabricating a biosensor chip, comprising
- performing a method according to any of the claims 13 or 14 for fabricating a biosensor wafer arrangement;
- cutting the biosensor wafer arrangement into a desired set of fractions to obtain the biosensor chip.

## Patentansprüche

1. Biosensor-Wafer-Anordnung (800), die einen Sensor-Wafer (200) und einen Mikrofluidik-Wafer (500) umfasst, wobei
- der Sensor-Wafer eine erste laterale Ausdehnung, eine Vorderseite und eine Rückseite aufweist, wobei die Vorderseite monolithisch integrierte elektronische, optoelektronische oder photonische Komponenten umfasst, und die Rückseite integrierte Biosensor-Vertiefungen (102) umfasst, die
- sich in einer Tiefenrichtung von einer Rückfläche auf der Rückseite des Sensor-Wafers zur Vorderseite hin erstrecken,
- für sich allein betrachtet fluidisch voneinander isoliert sind;
- eine Biosensorfläche aufweisen, die mit einer oder mehreren der Komponenten auf der Vorderseite zur Sensorsignalkommunikation durch den Sensor-Wafer verbunden ist;
- auf der Rückseite des Sensor-Wafers in einem ersten Muster ausgebildet und angeordnet sind; und wobei
- der Mikrofluidik-Wafer eine zweite laterale Ausdehnung, eine Vorderseite und eine Rückseite aufweist, wobei die Vorderseite integrierte Mikrofluidik-Kanalabschnitts-Vertiefungen (402) umfasst, die
- sich in einer Tiefenrichtung von einer Vorderfläche auf der Vorderseite des Mikrofluidik-Wafers zur Rückseite hin erstrecken,
- für sich allein betrachtet fluidisch voneinander isoliert sind; und
- auf der Vorderseite des Mikrofluidik-Wafers in einem zweiten Muster ausgebildet und angeordnet sind, das zum ersten Muster komplementär ist;
wobei der Sensor-Wafer und der Mikrofluidik-Wafer Rückfläche-zu-Vorderfläche fluiddicht kombiniert und relativ zueinander so positioniert sind, dass gegebene Mikrofluidik-Kanalabschnitte auf dem Mikrofluidik-Wafer mit jeweiligen Paaren von Biosensor-Vertiefungen auf dem Sensor-Wafer überlappen und eine laterale Ausdehnung aufweisen, die eine Mikrofluidik-Verbindung zwischen den jeweiligen Paaren von Biosensor-Vertiefungen über die Mikrofluidik-Kanalabschnitte herstellt.

2. Biosensor-Wafer-Anordnung nach Anspruch 1, wobei die integrierten Biosensor-Vertiefungen (102) und die Mikrofluidik-Kanalabschnitte (402) in eine Vielzahl von Gruppen (100, 400) unterteilt sind, die über den Wafer verteilt sind, und wobei der Mikrofluidik-Wafer (500) für jede Gruppe, sich vertikal von der Vorderseite zur Rückseite des Mikrofluidik-Wafers erstreckend, eine Fluideingangsöffnung (406) und eine Fluidausgangsöffnung (410) umfasst.

3. Biosensor-Wafer-Anordnung nach Anspruch 2, wobei zum Verteilen und Sammeln von Fluid zu und von den Gruppen von Biosensor-Vertiefungen (102)
- die Gruppen von Biosensor-Vertiefungen und die Gruppen von Mikrofluidik-Kanalabschnitten (402) jeweils in eine Vielzahl von Untergruppen unterteilt sind; und
- der Mikrofluidik-Wafer (500) ferner, zugeordnet zu jeder Gruppe von Mikrofluidik-Kanalabschnitten, umfasst:
- mit der Eingangsöffnung (406) verbunden und auf der Vorderseite angeordnet, einen Fluidverteilerkanalabschnitt (404), der so geformt und angeordnet ist, dass er eine Fluideingangsverbindung von der Fluideingangsöffnung zu den Untergruppen parallel herstellt, und,
- mit der Ausgangsöffnung verbunden und auf der Vorderseite angeordnet, einen Fluidsammlerkanalabschnitt, der so geformt und angeordnet ist, dass er eine Fluidausgangsverbindung von den Untergruppen zur Fluidausgangsöffnung herstellt.

4. Biosensor-Wafer-Anordnung nach einem der vorstehenden Ansprüche, wobei der Mikrofluidik-Wafer (500) auf seiner Vorderfläche einen Dichtungsfilm umfasst, der chemisch inert ist, zum Abdichten einer Schnittstelle zwischen der Rückfläche des Sensor-Wafers (200) und der Vorderfläche des Mikrofluidik-Wafers und zum Begrenzen des Fluidflusses zu den jeweiligen Vertiefungen (102).

5. Biosensor-Wafer-Anordnung nach einem der vorstehenden Ansprüche, wobei der Mikrofluidik-Wafer (500) kleiner als der Sensor-Wafer (200) ist und nur eine Teilmenge der Gruppen von Biosensor-Vertiefungen (102) auf dem Sensor-Wafer abdeckt, oder wobei der Mikrofluidik-Wafer, um eine optische Inspektion des Fluidtransports zu ermöglichen, aus einem transparenten Material besteht.

6. Biosensor-Wafer-Anordnung nach einem der vorstehenden Ansprüche, wobei
(a) die Biosensorfläche eine chemische Verbindung umfasst, die an der Biosensorfläche haftet und eine funktionelle Gruppe aufweist, die zum Erfassen einer oder mehrerer Arten von biochemischen oder biologischen Partikeln geeignet ist, oder wobei
(b) die Biosensorfläche mit einem Haftvermittler beschichtet ist, um eine chemische Funktionalisierung mit einer chemischen Verbindung zu fördern, die an die Biosensorfläche bereitgestellt werden und an der Biosensorfläche haften soll, um eine oder mehrere Arten von biochemischen oder biologischen Partikeln im Betrieb eines aus der Biosensor-Wafer-Anordnung herzustellenden Biosensors zu erfassen.

7. Biosensor-Wafer-Anordnung nach Anspruch 6, wobei die Biosensorfläche mit einer Sensorreinrichtung auf dem Sensor-Wafer (200) verbunden ist, die dazu ausgebildet ist, Änderungen einer physikalischen Größe der Biosensorfläche als Reaktion auf deren Erfassung der einen oder mehreren Arten von biochemischen oder biologischen Partikeln zu erfassen, und ein elektrisches Signal, das dies anzeigt, an die eine oder mehrere der auf der Vorderseite des Sensor-Wafers integrierten Komponenten bereitzustellen.

8. Biosensor-Wafer-Anordnung nach einem der vorstehenden Ansprüche, wobei entweder
(A) der Sensor-Wafer (200) und der Mikrofluidik-Wafer (500) durch eine mechanisch lösbare Verbindung kombiniert sind, um deren Kombination nur vorübergehend aufrechtzuerhalten; oder wobei
(B) der Sensor-Wafer und der Mikrofluidik-Wafer durch eine mechanisch feste Verbindung kombiniert sind, um deren Kombination dauerhaft aufrechtzuerhalten.

9. Biosensorchip, geschnitten aus einer Biosensor-Wafer-Anordnung gemäß einer Kombination aus Merkmalssatz (b) von Anspruch 6, Anspruch 7 und Alternative (B) von Anspruch 8.

10. Biosensor-Wafer-Kit zur Herstellung einer Biosensor-Wafer-Anordnung nach einem der Ansprüche 1 bis 8 oder eines Biosensorchips nach Anspruch 9, wobei das Wafer-Kit umfasst:
- ein oder mehrere der Sensor-Wafer (200);
- ein oder mehrere der Mikrofluidik-Wafer (500); wobei
- jeder der Sensor-Wafer eine erste laterale Ausdehnung, eine Vorderseite und eine Rückseite aufweist, wobei die Vorderseite integrierte elektronische Schaltungskomponenten umfasst, und die Rückseite integrierte Biosensor-Vertiefungen (102) umfasst, die
- sich in einer Tiefenrichtung von einer Rückfläche auf der Rückseite des Sensor-Wafers zur Vorderseite hin erstrecken,
- für sich allein betrachtet fluidisch voneinander isoliert sind;
- eine Biosensorfläche aufweisen;
- in einem ersten Muster angeordnet sind; und wobei
- jeder der Mikrofluidik-Wafer eine zweite laterale Ausdehnung, eine Vorderseite und eine Rückseite aufweist, wobei die Vorderseite integrierte Mikrofluidik-Kanalabschnitts-Vertiefungen (402) umfasst, die
- sich in einer Tiefenrichtung von einer Vorderfläche auf der Vorderseite des Mikrofluidik-Wafers zur Rückseite hin erstrecken,
- für sich allein betrachtet fluidisch voneinander isoliert sind; und
- in einem zweiten Muster ausgebildet und angeordnet sind, das zum ersten Muster komplementär ist, wenn der Sensor-Wafer und der Mikrofluidik-Wafer Rückfläche-zu-Vorderfläche kombiniert und relativ zueinander so positioniert sind, dass gegebene Mikrofluidik-Kanalabschnitte auf dem Mikrofluidik-Wafer mit jeweiligen Paaren von Biosensor-Vertiefungen auf dem Sensor-Wafer überlappen und eine laterale Ausdehnung aufweisen, die eine Mikrofluidik-Verbindung zwischen den jeweiligen Paaren von Biosensor-Vertiefungen über die Mikrofluidik-Kanalabschnitte herstellt.

11. Biosensor-Wafer-Kit nach Anspruch 10 zur Herstellung einer Vielzahl von Biosensor-Wafer-Anordnungen gemäß Alternative (A) von Anspruch 8, umfassend eine Vielzahl der Sensor-Wafer (200) und eine Anzahl von Mikrofluidik-Wafern (500), die kleiner ist als die Anzahl der Sensor-Wafer, zur mehrfachen Wiederverwendung eines jeweiligen Mikrofluidik-Wafers bei der Herstellung von Biosensor-Wafer-Anordnungen.

12. Verfahren zur Herstellung einer Biosensor-Wafer-Anordnung nach einem der Ansprüche 1 bis 8, wobei das Verfahren umfasst:
- Bereitstellen eines Wafer-Kits nach Anspruch 10 oder 11;
- Auswählen eines Sensor-Wafers (200) und eines Mikrofluidik-Wafers (500);
- Positionieren relativ zueinander und Kombinieren des Sensor-Wafers und des Mikrofluidik-Wafers Rückfläche-zu-Vorderfläche, derart, dass gegebene Mikrofluidik-Kanalabschnitte (402) auf dem Mikrofluidik-Wafer mit jeweiligen Paaren von Biosensor-Vertiefungen (102) auf dem Sensor-Wafer überlappen und eine laterale Ausdehnung aufweisen, die eine Mikrofluidik-Verbindung zwischen den jeweiligen Paaren von Biosensor-Vertiefungen über die Mikrofluidik-Kanalabschnitte herstellt.

13. Verfahren nach Anspruch 12, wobei
- das Biosensor-Wafer-Kit zur Herstellung einer Biosensor-Wafer-Anordnung gemäß einer Kombination aus zumindest Anspruch 2 und Merkmalssatz (a) von Anspruch 6 bestimmt ist; wobei das Verfahren ferner umfasst:
- Bereitstellen und Leiten eines funktionellen Fluids, das die chemische Verbindung zur chemischen Funktionalisierung umfasst, zu der Biosensorfläche der Biosensor-Vertiefungen (102), durch die Eingangsöffnung (406) auf dem Mikrofluidik-Wafer (500) und über die Mikrofluidik-Verbindungen zwischen den jeweiligen Paaren von Biosensor-Vertiefungen (102), die durch die Mikrofluidik-Kanalabschnitte (402) hergestellt sind, zum Anhaften an den Biosensorflächen.

14. Verfahren nach Anspruch 12 oder 13, ferner umfassend, vor dem Bereitstellen des funktionellen Fluids, Bereitstellen und Leiten eines Reinigungsfluids, das ein Reinigungsmittel zum Reinigen der Biosensorflächen umfasst, zu der Biosensorfläche der Biosensor-Vertiefungen (102), durch die Eingangsöffnung (406) auf dem Mikrofluidik-Wafer (500) und über die Mikrofluidik-Verbindungen zwischen den jeweiligen Paaren von Biosensor-Vertiefungen, die durch die Mikrofluidik-Kanalabschnitte (402) hergestellt sind.

15. Verfahren zur Herstellung eines Biosensorchips, umfassend:
- Durchführen eines Verfahrens nach einem der Ansprüche 13 oder 14 zur Herstellung einer Biosensor-Wafer-Anordnung;
- Schneiden der Biosensor-Wafer-Anordnung in einen gewünschten Satz von Fraktionen, um den Biosensorchip zu erhalten.

## Revendications

1. Un arrangement de plaquette de biocapteur (800), comprenant une plaquette de capteur (200) et une plaquette microfluidique (500), dans lequel
- la plaquette de capteur présente une première extension latérale, une face avant et une face arrière, la face avant comprenant des composants électroniques, optoélectroniques ou photoniques intégrés de manière monolithique, et la face arrière comprenant des évidements de biocapteur intégrés (102) qui
- s'étendent dans une direction en profondeur depuis une surface arrière sur la face arrière de la plaquette de capteur vers la face avant,
- considérés isolément au niveau de la plaquette de capteur, sont isolés fluidiquement les uns des autres;
- présentent une surface de biocapteur reliée à un ou plusieurs des composants sur la face avant pour une communication de signal de capteur à travers la plaquette de capteur;
- sont formés et disposés sur la face arrière de la plaquette de capteur selon un premier motif; et dans lequel
- la plaquette microfluidique présente une seconde extension latérale, une face avant et une face arrière, la face avant comprenant des évidements de section de canal microfluidique intégrés (402) qui
- s'étendent dans une direction en profondeur depuis une surface avant sur la face avant de la plaquette microfluidique vers la face arrière,
- considérés isolément au niveau de la plaquette microfluidique, sont isolés fluidiquement les uns des autres; et
- sont formés et disposés sur la face avant de la plaquette microfluidique selon un second motif complémentaire au premier motif;
dans lequel la plaquette de capteur et la plaquette microfluidique sont combinées surface arrière contre surface avant de manière étanche aux fluides et positionnées l'une par rapport à l'autre de telle sorte que des sections de canal microfluidique données sur la plaquette microfluidique chevauchent des paires respectives d'évidements de biocapteur sur la plaquette de capteur et présentent une extension latérale qui établit une interconnexion microfluidique entre les paires respectives d'évidements de biocapteur via les sections de canal microfluidique.

2. L'arrangement de plaquette de biocapteur selon la revendication 1, dans lequel les évidements de biocapteur intégrés (102) et les sections de canal microfluidique (402) sont répartis en une pluralité de groupes (100, 400) distribués sur la plaquette, et dans lequel, pour chaque groupe, la plaquette microfluidique (500) comprend, s'étendant verticalement de la face avant à la face arrière de la plaquette microfluidique, un orifice d'entrée de fluide (406) et un orifice de sortie de fluide (410).

3. L'arrangement de plaquette de biocapteur selon la revendication 2, dans lequel, pour distribuer et collecter du fluide vers et depuis les groupes d'évidements de biocapteur (102),
- les groupes d'évidements de biocapteur et les groupes de sections de canal microfluidique (402) sont chacun répartis en une pluralité de sous-groupes; et
- la plaquette microfluidique (500) comprend en outre, associée à chaque groupe de sections de canal microfluidique:
- reliée à l'orifice d'entrée (406) et disposée sur la face avant, une section de canal distributeur de fluide (404) qui est façonnée et disposée pour établir une connexion d'entrée de fluide depuis l'orifice d'entrée de fluide vers les sous-groupes en parallèle, et,
- reliée à l'orifice de sortie et disposée sur la face avant, une section de canal collecteur de fluide qui est façonnée et disposée pour établir une connexion de sortie de fluide depuis les sous-groupes vers l'orifice de sortie de fluide.

4. L'arrangement de plaquette de biocapteur selon l'une quelconque des revendications précédentes, dans lequel la plaquette microfluidique (500) comprend, sur sa surface avant, un film d'étanchéité chimiquement inerte, destiné à assurer l'étanchéité d'une interface entre la surface arrière de la plaquette de capteur (200) et la surface avant de la plaquette microfluidique et à limiter l'écoulement de fluide vers les évidements respectifs (102).

5. L'arrangement de plaquette de biocapteur selon l'une quelconque des revendications précédentes, dans lequel la plaquette microfluidique (500) est plus petite que la plaquette de capteur (200) et ne recouvre qu'un sous-ensemble des groupes d'évidements de biocapteur (102) sur la plaquette de capteur, ou dans lequel la plaquette microfluidique, pour permettre une inspection optique du transport de fluide, est réalisée en un matériau transparent.

6. L'arrangement de plaquette de biocapteur selon l'une quelconque des revendications précédentes, dans lequel
(a) la surface de biocapteur comprend un composé chimique qui adhère à la surface de biocapteur et présente un groupe fonctionnel apte à capturer un ou plusieurs types de particules biochimiques ou biologiques, ou dans lequel
(b) la surface de biocapteur est revêtue d'un agent d'adhérence destiné à favoriser une fonctionnalisation chimique avec un composé chimique devant être fourni à la surface de biocapteur et adhérer à la surface de biocapteur pour capturer un ou plusieurs types de particules biochimiques ou biologiques lors du fonctionnement d'un biocapteur destiné à être fabriqué à partir de l'arrangement de plaquette de biocapteur.

7. L'arrangement de plaquette de biocapteur selon la revendication 6, dans lequel la surface de biocapteur est reliée à un dispositif de détection sur la plaquette de capteur (200) qui est configuré pour détecter des changements d'une grandeur physique de la surface de biocapteur en réponse à sa capture desdits un ou plusieurs types de particules biochimiques ou biologiques, et pour fournir un signal électrique indicatif de celle-ci à un ou plusieurs des composants intégrés sur la face avant de la plaquette de capteur.

8. L'arrangement de plaquette de biocapteur selon l'une quelconque des revendications précédentes, dans lequel soit
(A) la plaquette de capteur (200) et la plaquette microfluidique (500) sont combinées par une liaison mécaniquement détachable, permettant de ne maintenir leur combinaison que temporairement; soit dans lequel
(B) la plaquette de capteur et la plaquette microfluidique sont combinées par une liaison mécaniquement fixe, permettant de maintenir leur combinaison de manière permanente.

9. Une puce de biocapteur, découpée à partir d'un arrangement de plaquette de biocapteur selon une combinaison du jeu de caractéristiques (b) de la revendication 6, de la revendication 7 et de l'alternative (B) de la revendication 8.

10. Un kit de plaquettes de biocapteur pour la fabrication d'un arrangement de plaquette de biocapteur selon l'une quelconque des revendications 1 à 8 ou d'une puce de biocapteur selon la revendication 9, le kit de plaquettes comprenant:
- une ou plusieurs des plaquettes de capteur (200);
- une ou plusieurs des plaquettes microfluidiques (500); dans lequel
- chacune des plaquettes de capteur présente une première extension latérale, une face avant et une face arrière, la face avant comprenant des composants de circuit électronique intégrés, et la face arrière comprenant des évidements de biocapteur intégrés (102) qui
- s'étendent dans une direction en profondeur depuis une surface arrière sur la face arrière de la plaquette de capteur vers la face avant,
- considérés isolément au niveau de la plaquette de capteur, sont isolés fluidiquement les uns des autres;
- présentent une surface de biocapteur;
- sont disposés selon un premier motif; et dans lequel
- chacune des plaquettes microfluidiques présente une seconde extension latérale, une face avant et une face arrière, la face avant comprenant des évidements de section de canal microfluidique intégrés (402) qui
- s'étendent dans une direction en profondeur depuis une surface avant sur la face avant de la plaquette microfluidique vers la face arrière,
- considérés isolément au niveau de la plaquette microfluidique, sont isolés fluidiquement les uns des autres; et
- sont formés et disposés selon un second motif complémentaire au premier motif lorsque la plaquette de capteur et la plaquette microfluidique sont combinées surface arrière contre surface avant et positionnées l'une par rapport à l'autre de telle sorte que des sections de canal microfluidique données sur la plaquette microfluidique chevauchent des paires respectives d'évidements de biocapteur sur la plaquette de capteur et présentent une extension latérale qui établit une interconnexion microfluidique entre les paires respectives d'évidements de biocapteur via les sections de canal microfluidique.

11. Le kit de plaquettes de biocapteur selon la revendication 10, pour la fabrication d'une pluralité d'arrangements de plaquette de biocapteur selon l'alternative (A) de la revendication 8, comprenant une pluralité des plaquettes de capteur (200) et un nombre de plaquettes microfluidiques (500) inférieur au nombre de plaquettes de capteur, pour une réutilisation multiple d'une plaquette microfluidique donnée lors de la fabrication d'arrangements de plaquette de biocapteur.

12. Un procédé de fabrication d'un arrangement de plaquette de biocapteur selon l'une quelconque des revendications 1 à 8, le procédé comprenant:
- la fourniture d'un kit de plaquettes selon la revendication 10 ou 11;
- la sélection d'une plaquette de capteur (200) et d'une plaquette microfluidique (500);
- le positionnement l'une par rapport à l'autre et la combinaison de la plaquette de capteur et de la plaquette microfluidique surface arrière contre surface avant, de telle sorte que des sections de canal microfluidique (402) données sur la plaquette microfluidique chevauchent des paires respectives d'évidements de biocapteur (102) sur la plaquette de capteur et présentent une extension latérale qui établit une interconnexion microfluidique entre les paires respectives d'évidements de biocapteur via les sections de canal microfluidique.

13. Le procédé selon la revendication 12, dans lequel
- le kit de plaquettes de biocapteur est destiné à la fabrication d'un arrangement de plaquette de biocapteur selon une combinaison d'au moins la revendication 2 et du jeu de caractéristiques (a) de la revendication 6; le procédé comprenant en outre:
- la fourniture et l'acheminement, vers la surface de biocapteur des évidements de biocapteur (102), à travers l'orifice d'entrée (406) sur la plaquette microfluidique (500) et via les interconnexions microfluidiques entre les paires respectives d'évidements de biocapteur (102) établies par les sections de canal microfluidique (402), d'un fluide fonctionnel comprenant le composé chimique destiné à la fonctionnalisation chimique, pour l'adhérence aux surfaces de biocapteur.

14. Le procédé selon la revendication 12 ou 13, comprenant en outre, avant la fourniture du fluide fonctionnel, la fourniture et l'acheminement, vers la surface de biocapteur des évidements de biocapteur (102), à travers l'orifice d'entrée (406) sur la plaquette microfluidique (500) et via les interconnexions microfluidiques entre les paires respectives d'évidements de biocapteur établies par les sections de canal microfluidique (402), d'un fluide de nettoyage comprenant un agent de nettoyage destiné au nettoyage des surfaces de biocapteur.

15. Un procédé de fabrication d'une puce de biocapteur, comprenant:
- la mise en œuvre d'un procédé selon l'une quelconque des revendications 13 ou 14 pour fabriquer un arrangement de plaquette de biocapteur;
- la découpe de l'arrangement de plaquette de biocapteur en un ensemble souhaité de fractions pour obtenir la puce de biocapteur.
